# EUROPÄISCHE PATENTSCHRIFT

(11) **EP 0 780 638 B1**
(45) Veröffentlichungstag und Bekanntmachung des Hinweises auf die Patenterteilung: **03.09.2003**
(21) Anmeldenummer: 96119252.3
(22) Anmeldetag: 30.11.1996
(51) Int. Cl.: F23R 3/00, F23R 3/04, F23R 3/06

(54) **Brennkammer für Gasturbinentriebwerke**
Combustion chamber for gasturbine
Chambre de combustion pour turbine à gaz

(30) Priorität: 20.12.1995 DE 19547703
(43) Veröffentlichungstag der Anmeldung: 25.06.1997
(73) Patentinhaber: MTU Aero Engines GmbH, 80995 München (DE)
(72) Erfinder: Zarzalis, Nikolaos, Dr., 85221 Dachau (DE)
(74) Vertreter: Einsele, Rolf W.

(56) Entgegenhaltungen:
- EP-A- 0 248 731
- EP-A- 0 491 625
- DE-A- 2 332 699
- DE-A- 2 944 139
- GB-A- 2 017 827
- US-A- 4 012 902
- US-A- 4 819 438
- US-A- 4 887 432
- US-A- 5 174 108

## Beschreibung

Die Erfindung bezieht sich auf eine Brennkammer für Gasturbinentriebwerke nach dem Oberbegriff des Patentanspruchs 1.

Aus der GB-A-2 074 307 ist es bekannt, die äußere Flammrohrwand fortlaufend in Längsrichtung mit stufenartig zueinander versetzten Abschnitten von über dem Umfang geteilten Wandsegmenten auszukleiden. Axiale Rippen an den Wandsegmenten bilden axial einander entgegengerichtet, von Kühlluft durchströmte, kanalartige Kühlluftführungen aus. In Zonen konischer Aufweitung der Flammrohraußenwand erfolgt die Aufbereitung und Speisung der Kühlfilme aus Luftanteilen, die aus einer ersten Kühlluftführung stromab abfließen und aus der nächstfolgenden Kühlluftführung zunächst stromauf abfließen. Radiale Luftbuchsen sind umfänglich und fest mit der Außenwand des Flammrohrs verbunden.

Der bekannte Fall sowie eine in der EP-A-0 199 534 offenbarte Flammrohrgestaltung zielt ausschließlich auf die Temperaturbeherrschung ab, die dabei mit fortlaufend in das Flammrohr abströmenden Kühlluftanteilen verbunden ist; und zwar besonders aus den Kühlfilmen, wie aber auch Leckagen zwischen den Segmenten und aus Buchsenbespülungen.

Es bereitet Schwierigkeiten, die Problematik der Flammrohrtemperaturbeherrschung mit der Problematik einer an Schadstoffen armen sowie gleichförmigen und stabilen Verbrennung miteinander in Einklang zu bringen.

Für eine schadstoffarme Verbrennung ist es für sich bekannt, eine Kombination aus einer vergleichsweise "fetten" ersten und einer sich daran anschließenden zweiten "mageren" bzw. "kalten" Verbrennung vorzusehen. Der Begriff "fett" beinhaltet eine an Brennstoff reiche und luftarme, im wesentlichen stöchiometrische Verbrennung; die Begriffe "mager" oder "kalt" definieren eine an Brennstoff arme und luftreiche Verbrennung, wobei diese Verbrennung im Bereich der sogenannten "Arm-Verlöschgrenze" betrieben werden kann.

Im Rahmen der eingangs erwähnten Flammrohrwandkühlung besteht die Gefahr, dass in die primäre Verbrennungszone ("fette Verbrennung") abströmende Luftanteile, insbesondere aus den Kühlfilmen, zusammen mit den unverbrannten bzw. überschüssigen Brennstoffanteilen fallweise örtlich mitverbrennen. Dabei wird dem Kühlprozess Luft entzogen und verbrannt. Außerdem wird hierdurch, neben örtlich extrem hohen Temperaturbelastungen am Flammrohr, die gleichförmige und stabile Verbrennung beeinträchtigt und es sind erhöhte Emissionen an Schadstoffen (C,CO, CxHy) zu erwarten.

Ferner besteht die Gefahr einer erhöhten Stickoxid-Emission (NOx), die im Bereich der örtlichen Zumischung von Verbrennungsluft in der primären Verbrennungszone (spontaner Luftüberschuss) entsteht. Es führen dabei die hohen Verbrennungstemperaturen (um 2000 °C und darüber) und die relativ zeitlich ausgedehnten Verweilzeiten der stick- und sauerstoffhaltigen Gase zur relativ ausgeprägten Stickoxidbildung.

Aus der GB-A-2 017 827 ist eine Brennkammer bekannt, deren Flammrohr mit Ausnahme des Brennstoffdüsenbereiches doppelwandig ausgeführt und brenngasseitig filmgekühlt ist. Die Verdichterluft tritt durch eine Vielzahl kleiner Perforationen im Sinne einer Prallkühlung durch die Außenwand des Flammrohres, trifft in annähernd rechtem Winkel auf die Innenwand und wird durch geeignete Öffnungen/Schlitze in Wandlängsrichtung umgelenkt und als Film über die brenngasseitige Innenfläche der Innenwand verteilt. In axialem Abstand zur Brennstoffdüse sind Luftbuchsen angeordnet, die Verbrennungsluft von außen durch das doppelwandige Flammrohr in die Brennzone leiten. Stromaufwärts der Luftbuchsen ist eine brennstoffreiche Verbrennungszone, stromabwärts davon eine brennstoffarme Verbrennungszone zu erwarten. Die Filmkühlung in der brennstoffreichen Zone erschwert jedoch eine kontrollierte, insbesondere NOx-arme Verbrennung.

Die US-A-4 012 902 schützt ein Verfahren zum Betrieb einer Gasturbinenbrennkammer im Hinblick auf reduzierte Schadstoffemissionen mittels einer 3-Zonen-Verbrennung. Das Flammrohr ist nur im Bereich der ersten, brennstoffreichen Zone doppelwandig ausgeführt. Am stromaufwärtigen Ende der zweiten und dritten Verbrennungszone gibt es radiale Luftöffnungen für die Zufuhr von Verbrennungsluft, wobei die Kühlluft aus der Doppelwand in die dritte Zone eingeleitet wird. Das Verfahren verzichtet völlig auf eine Filmkühlung, so dass mit hohen Wandtemperaturen zu rechnen ist. Die Bauweise weist eher auf stationäre Gasturbinen als auf Fluggasturbinen hin.

Die EP-A-0 491 625 offenbart eine Gasturbinenbrennkammer in "Umkehrbauweise" mit besonders kurzer, axialer Baulänge. Im Bereich der brennstoffreichen Verbrennungszone ist das Flammrohr komplett doppelwandig sowie ohne Filmkühlung ausgeführt. Stromabwärts des doppelwandigen Bereiches sind Luftöffnungen für zusätzliche Verbrennungsluft sowie Filmkühlungsgeometrien vorhanden. Die eher undefinierten Strömungsverhältnisse stromabwärts des doppelwandigen Flammrohrbereichs in der luftangereicherten Zone erschweren eine kontrollierte Verbrennung.

Der Erfindung liegt die Aufgabe zugrunde, eine Brennkammer eingangs genannter bekannter Art derart auszubilden, dass bei vergleichsweise thermisch hochbelastbarer und stabiler Flammrohrkonstruktion eine an Schadstoffen arme sowie gleichförmige und stabile Verbrennung ermöglicht wird.

Diese Aufgabe wird durch die in Anspruch 1 gekennzeichneten Merkmale gelöst, in Verbindung mit den gattungsbildenden Merkmalen in dessen Oberbegriff.

Das Flammrohr ist einschließlich seiner brennstoffdüsenseitigen Rückwand doppel-wandig ausgeführt, wobei der doppelwandige Bereich sich bis in die brennstoffarme Nachbrennzone (III) erstreckt und auf der stromabwärts liegenden Wand des Flammrohres eine Filmkühlung erzeugt. Die brennstoffreiche Verbrennungszone (I) und die mit Luftbuchsen versehene Zumisch-Brennzone (II) sind ohne Filmkühlung ausgeführt, um unkontrollierte, lokale Verbrennungsvorgänge mit hoher Temperaturbelastung und NOx-Bildung zu vermeiden. In Zone III mit Luftüberschuss kann die Filmkühlung die gewünschte positive Wirkung entfalten, da der Luftfilm hier im wesentlichen nicht mehr an der Verbrennung teilnimmt.

In den Unteransprüchen sind bevorzugte Ausgestaltungen der Brennkammer nach Anspruch 1 gekennzeichnet.

Anhand der Zeichnungen ist die Erfindung durch Ausführungsbeispiele weiter erläutert; es zeigen:

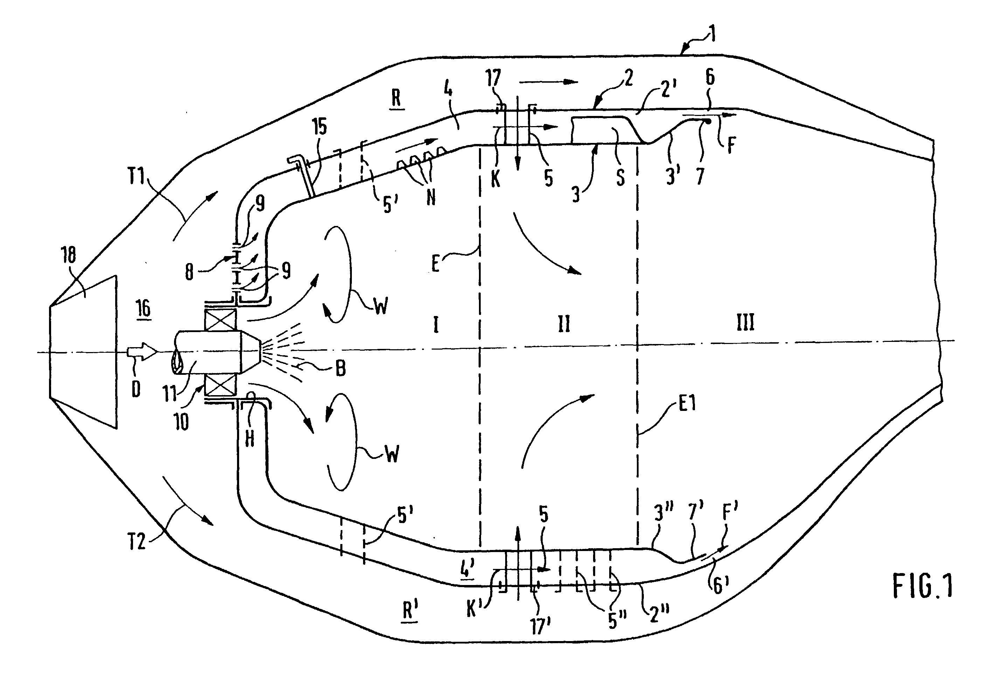

- Fig. 1: eine axiale Schnittdarstellung einer stromab abgebrochen gezeichneten Ringbrennkammer mit drei axial aufeinanderfolgenden Brennzonen und mit konvektiv gekühlter, die Rückwand einschließender Flammrohrwandabschirmung, wobei die Kühlluftführung im wesentlichen ringförmig ausgebildet ist und von der Rückwand aus über die ersten beiden Brennzonen hinweg zur dritten Brenn- bzw. Nachbrennzone geführt ist,

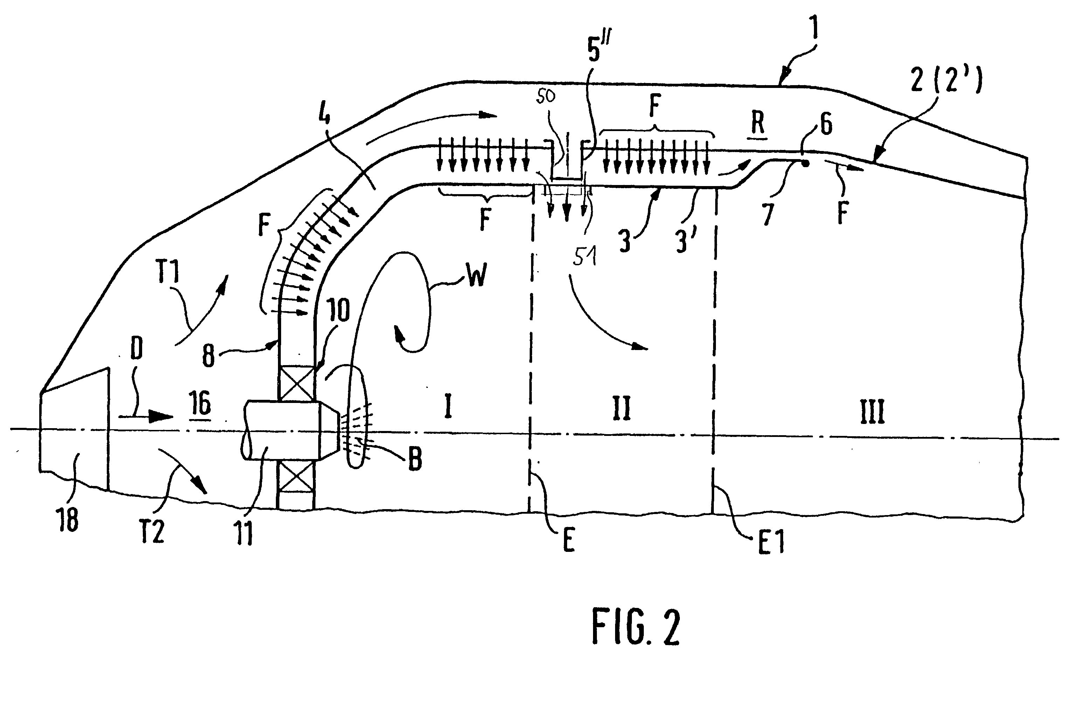

- Fig. 2: einen Axialschnitt der im wesentlichen oberen Hälfte der Ringbrennkammer in Abwandlung gegenüber Fig. 1 dergestalt, daß die Wandabschirmung der Flammrohraußenwand in Kombination aus Aufprall-und Konvektionskühlung gekühlt ist sowie mit Ausführung der Luftbuchsen als Injektordüsen und

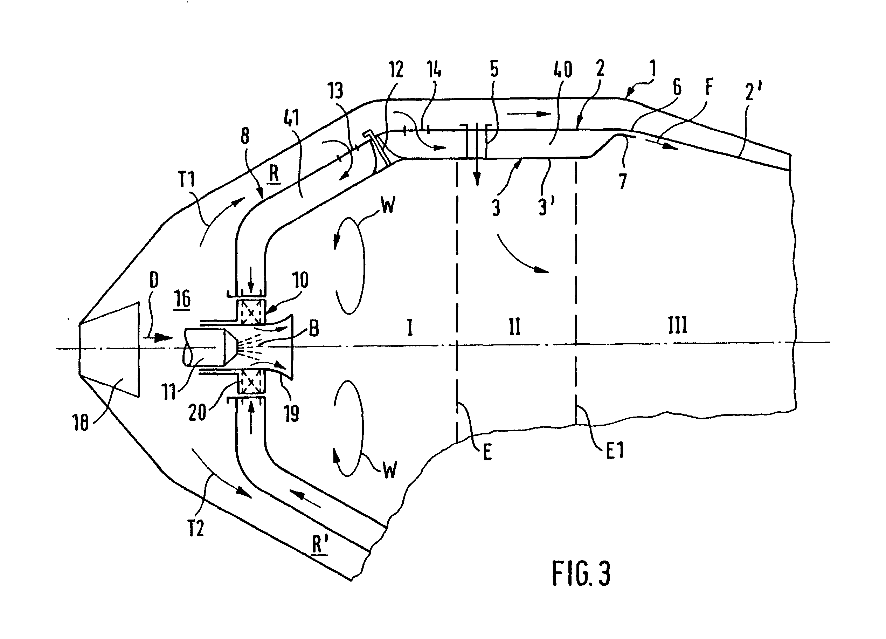

- Fig. 3: einen Axialschnitt einer endseitig ganz und unten örtlich teilweise abgebrochen gezeichneten Ringbrennkammer in Abwandlung zu Fig. 1 und 2 dergestalt, daß die Kühlluftführung radial außen geteilt ist, so daß ein die Rückwand einschließender Teil der Kühlluftführung abströmseitig radial innen an die Lufteintritte einer Drallvorrichtung für primäre Verbrennungsluft angeschlossen ist.

Die Ringbrennkammer nach Fig. 1 weist ein ringförmiges Außengehäuse 1 auf, in dem ein Flammrohr so angeordnet ist, daß ein radial äußerer und ein radial innerer Ringkanal R, R' ausgebildet wird. Die Außenwand 2 des Flammrohrs zerfällt im vorliegenden Fall in die ringförmigen Teile 2' - oben außen - und 2" - unten außen. Demgemäß zerfällt das Wandelement 3, das die Außenwand 2 vor den hochtemperaturigen Verbrennungsgasen schützen soll, jeweils in die Ringelemente 3' bzw. 3", die jeweils radial mit Abstand im Flammrohr sich ringförmig einander gegenüberliegen und im wesentlichen eine an Brennstoff reiche Brennzone I und eine Zumisch-Brennzone II einschließen. Stromab schließt sich an die Zumisch-Brennzone II eine Nachbrennzone III an, die zur Hauptsache von sich radial einander mit Abstand gegenüberliegenden Abschnitten beider Teile 2', 2" der Außenwand 2 umschlossen ist.

Gegenüber den beiden ringförmigen Teilen 2', 2" der Außenwand 2 schließt das Wandelement 3 mit den beiden Ringelementen 3, 3" jeweils eine ringförmige Kühlluftführung 4, 4' ein. Dabei verengt sich jeweils die Kühlluftführung 4, 4' hinter dem stromabwärtigen Ende der Zumisch-Brennzone II zu einem Ringschlitz 6 bzw. 6'. Dieser wird jeweils zwischen einem Lippenende 7, 7' und mit Abstand daran angrenzenden Abschnitten von beiden ringförmigen Teilen 2', 2" der Außenwand 2 ausgebildet. Über den Ringschlitz 6 bzw. 6' wird jeweils ein Kühlfilm F, F' ausgebildet, um die beiden ringförmigen Teile 2, 2' stromauf in der Nachbrennzone III zu kühlen und vor Durchbrand zu schützen. Am Ringschlitz 6, 6' kann das betreffende Lippenende 7, 7' einen Schiebesitz gegenüber den Teilen 2', 2" ausbilden, z.B. mit Noppen oder Stegen.

Um die Zumisch-Brennzone II, in der die vergleichsweise höchste Brenntemperatur (ca. 2 300 °C) herrscht, mit der für die dortige Verbrennung benötigten Luft zu versorgen, sind auf beiden sich einander gegenüberliegenden Seiten an den betreffenden Ringelementen 3', 3" radiale Luftbuchsen 5 fest und fluiddicht gegenüber der diese umgebenden Kühlluftströmung K, K' in der Kühlluftführung 4, 4' angeordnet. Diese Luftbuchsen 5 können in einer Reihe mit gleichmäßigen Abständen zueinander über dem jeweiligen Umfang verteilt angeordnet sein. Die Luftbuchsen 5 stellen jeweils vergleichsweise große Durchströmquerschnitte für die zur Verbrennung in der Zumisch-Brennzone 2 benötigten Luft bereit und münden hier in den stromaufwärtigen Bereich dieser Zone II ein. Wie in Fig. 1 - unten - gestrichelt dargestellt, kann die dortige Verbrennungsluftversorgung auch mit mehreren Luftbuchsen 5" jeweils relativ kleineren Durchströmquerschnittes erfolgen, die in axial beabstandeten Reihen über den Umfang angeordnet sind. Der jeweilige Kühlfilm, z. B. F', würde dann stromab der jeweils hintersten Reihe von Luftbuchsen 5" ausgebildet.

Im Beispiel der Fig. 1 wird die Kühlluftführung 4 aus einem Raum 16, stromauf der Rückwand 8, über Bohrungen 9 im dortigen ringförmigen Teil 2' der Außenwand 2 mit Kühlluft versorgt. Es ist also auch die Rückwand 8 doppelwandig ausgebildet und intensiv gekühlt. Stromauf beginnt dabei die Kühlluftführung 4 bzw. 4' schon an der Rückwand 8 und es kann ein vergleichsweise großer Anteil des in der an Brennstoff reichen Brennzone I und des in der Zumisch-Brennzone II erzeugten Wärmepotentials im konvektiven Wärmetausch mit der Kühlluft in Richtung stromab über den Kühlfilm F bzw. F' der Nachbrennzone III zugeführt werden.

Mit Ausnahme des stromab befindlichen Ringschlitzes 6 bzw. 6' sind die betreffenden Ringelemente 3', 3", und damit die Kühlluftführungen 4, 4' gegenüber dem Flammrohrinneren, insbesondere den Brennzonen I und II, bauteilmäßig sowie aerodynamisch in sich geschlossen ausgebildet. Trotzdem ist axiale und radiale Beweglichkeit der beiden Ringelemente 3', 3" der Außenwand 3 gewährleistet. Hierzu können z. B. die Luftbuchsen 5 beigezogen werden, die jeweils radial außen durch Öffnungen 17 bzw. 17' in den ringförmigen Teilen 2', 2" der Außenwand 2 hindurchgeführt sind; die Öffnungen 17, 17' sind axial länger als der äußere maximale Buchsendurchmesser sowie umfänglich auf letzteren abgestimmt ausgeführt. An den jeweils radial äußeren Zuströmenden sind die Luftbuchsen 5 - oberhalb der ringförmigen Teile 2', 2" - randseitig umfänglich axial umgebogen.

Weitere Aufhängungsmittel des Wandelements 3, z. B. am ringförmigen Teil 3' verkörpert, können durch an diesem fixierte Stifte oder Stege 15 dargestellt werden, die ebenfalls durch angepaßte Schlitze im betreffenden ringförmigen Teil 2' der Außenwand radial und axial verschieblich hindurchgeführt und oberhalb des Teils 2' der Außenwand 2, über ein axiales Schlitzende hinweg, umgebogen sein können.

In der zu den Buchsen 5 an der Luftzumischzone II geschilderten Art und Weise können der an Brennstoff reichen Brennzone I, also stromauf der Buchsen 5, weitere Luftbuchsen 5' zugeordnet sein, mit denen dieser Brennzone I ausschließlich oder zusammen mit einem Wirbelgenerator 10 die primäre Verbrennungsluft zugeführt werden kann. Über den Wirbelgenerator 10 als "Luftdralleinrichtung" kann auch für sich die ausschließliche primäre Verbrennungsluft zugeführt werden. Der Wirbelgenerator wird aus dem Raum 16, stromauf der Rückwand 8, mit Druckluft versorgt. Der Wirbelgenerator 10 ist an einem hülsenartig axial in den Raum 16 vorstehenden Endteil der Rückwand 8 gehaltert und ummantelt eine Brennstoffdüse 11. In der an Brennstoff reichen Brennzone I bildet somit der Wirbelgenerator 10 ein mit Brennstoff B aus der Brennstoffdüse 11 angereicherten Rotationswirbel W aus, der zugleich als Flammenstabilisator fungiert.

Der Raum 16 am Kopfende der Brennkammer wird über einen Axialdiffusor 18 mittels am Verdichterende des Triebwerks entnommener Druckluft D versorgt, von der ein Teil dem Wirbelgenerator 10 als Verbrennungsluft der an Brennstoff reichen Brennzone I zugeführt wird (Wirbel W). Ein weiterer Teil der zugeführten Druckluft D gelangt als Kühlluft über die Öffnungen 9 an der Rückwand 8 in den stromaufwärtigen Teil der Kühlluftführung 4 bzw. 4'. Übrige Teile T1, T2 der zugeführten Druckluft D strömen aus dem Raum 16 stromabwärtig in die äußeren Ringkanäle R, R' der Brennkammer ab, aus denen sämtlichst dargestellte bzw. alternativ vorgesehene Luftbuchsen 5, 5', 5" und die betreffenden Brennzonen II bzw. I mit Verbrennungsluft versorgbar sind.

Das stromabwärtige Ende der an Brennstoff reichen bzw. primären Verbrennungszone I sowie der Anfang der Zumisch-Brennzone II fallen mit der volumetrischen Querebene E zusammen; das stromabwärtige Ende der Zumisch-Brennzone II und der Anfang der mageren Ausbrenn- bzw. Nachbrennzone III fallen mit der volumetrischen Querebene El zusammen.

Ferner erkennt man aus Fig. 1, daß die jeweils stromaufwärtig und radial beabstandet der Brennstoffdüse 10 nächstliegenden Enden von beiden Ringelementen 3', 3" axial und radial beweglich und in kragenartig relativ zueinander versetzter koaxialer Bauweise mit einem Hülsenende H korrespondieren, an dem der Wirbelgenerator 10 stromauf, im Raum 16, an der Rückwand 8 gehalten ist.

Wie ferner in Fig. 1 - oben - am Ringelement 3' verdeutlicht, können an diesem in der Kühlluftströmung K befindliche Noppen N oder Stege S - letztere hier einseitig abgebrochen dargestellt - angeordnet sein, um die relative effektive Wärmeübergangsfläche zu vergrößern. In der Art von mit Abstand über dem Umfang angeordneten axialen Stegen S kann die Kühlluftführung 4 bzw. 4' zum Teil oder überwiegend in axial durchströmbare Kanäle aufgeteilt werden.

Unter Verwendung gleicher Bezugszeichen für mit Fig. 1 vergleichbare oder identische Bauteile und Funktionen verdeutlicht Fig. 2 die Anwendung einer hocheffektiven Aufprallkühlung F, die hier auf Zonen an der Rückwand 8 bzw. der an Brennstoff reichen Brennzone I und an der Zumisch-Brennzone II verteilt ist. Dabei ist auch eine umfänglich kammerweise zergliederte Bauweise für die Aufprallkühlung F denkbar unter Anwendung umfänglich beabstandeter Trennungsstege in der Kühlluftführung, z. B. 4, in Anwendung von Stegen S im Sinne der Fig. 1 - oben. Mit den Stegen S ist eine umfängliche Kombination im Wechsel zwischen Aufprallkühlung F und im wesentlichen axialer Strömungsführung der Kühlluft in Kanälen vorstellbar. Ferner kann die Aufprallkühlung F regional auf die Kühlung des die Außenwand 2 an der Rückwand 8 abschirmenden Ringelements, z. B. 3', beschränkt werden.

Die jeweilige Aufprallkühlung F ist gemäß dortigen Pfeilen durch die Ausbildung hochenergetischer Luftstrahlen gekennzeichnet, die von hochfeinen Löchern bzw. Loch-Perforationen gebildet sind, und zwar in der Außenwand 2 bzw. in dem betreffenden ringförmigen Teil 2' derselben. Nach dem örtlichen Aufprall der Kühlluftstrahlen auf den ringförmigen Teil 2' ergibt sich eine in Wandlängsrichtung abflies-sende Zirkulationsströmung, die sich stromauf des Schlitzes 6 in der Kühlluftführung 4 umfänglich volumetrisch gleichförmig stabilisiert.

Desweiteren zeigt die Ausführung gemäß Fig. 2 die Ausbildung der Luftbuchsen 5" als Injektordüsen, so daß ein Teilstrom der Kühlluft aus der stromaufwärts gelegenen Kühlluftführung 4 durch Impulsaustausch in die Zumisch-Brennzone II gefördert wird. Hierzu weisen die Luftbuchsen 5" einen radial inneren Kanal 50 zur Führung der Verbrennungsluft und einen radial äußeren, konzentrischen Kanal 51 zur Führung der Kühlluft in das Flammrohr auf. Der übrige Teilstrom der Kühlluft tritt stromabwärts in der Nachbrennzone III als Kühlfilm aus.

Wie überwiegend anhand der oberen Brennkammerhälfte in Fig. 3 verdeutlicht, wird im stromaufwärtig radial äußeren Bereich der Brennkammer von einer wandartigen Abschirmung 12 eine seitlich axiale Kühlluftführung 40 und eine weitere, überwiegend die Rückwand 8 einschließende Kühlluftführung 41 ausgebildet. Über radial äußere vor bzw. hinter der Abschirmung 12 im ringförmigen Teil 2' der Außenwand 2 befindliche Öffnungen 13 bzw. 14 sind beide Kühlluftführungen 40 bzw. 41 voneinander getrennt mit der hier z. B. aus dem äußeren Ringkanal R entnommenen Kühlluft versorgbar. Die eine Kühlluftführung 40 wird in stromabwärtiger Richtung von Kühlluft durchströmt und umschließt dabei einen Teil der an Brennstoff reichen Verbrennungszone I, ferner die Zumisch-Brennzone II und verengt sich schließlich weiter stromab zwecks Ausbildung des Kühlfilmes F in der Nachbrennzone III. Die andere Kühlluftführung 41 wird von ihrem radial äußeren Teil aus in Richtung auf die innenliegende Drallvorrichtung 10 von Kühlluft durchströmt. Am radial innenliegenden Ende steht diese Kühlluftführung 41 mit den äußeren Lufteintritten der Drallvorrichtung 10 in Verbindung. Mit ihrem Strömungsverlauf entzieht die Kühlluft im Wege der betreffenden Wandkühlung dem heißen Verbrennungsprozeß in Zone I Wärme; aus der Drallvorrichtung 10 strömt somit vorgewärmte Prozeßluft in der Art eines Rotationswirbels W in die Brennzone I für die primäre Verbrennung ab. Die am inneren Ringumfang gleichförmig schräg tangential endenden Kanäle 20 der Drallvorrichtung 10 münden in eine Drallkammer, die axial vor der Brennstoffdüse 11 liegt.

Die Drallkammer geht in eine gegenüber der Brennzone I offene und in Richtung der Durchströmung trichterförmig aufgeweitete Hülse 19 über. Gegen diese wird Brennstoff B abgespritzt, der am Hülsenende fein zerstäubt abreißt und in den Rotationswirbel W eingebunden wird. In Abwandlung der Fig. 3 besteht die Möglichkeit der Verwendung einer Aufprallkühlung für die beiden Kühlluftführungen 40, 41; diese Aufprallkühlung kann funktionsmäßig im Sinne der Positionen F nach Fig. 2 ausgebildet sein.

Bei sämtlichen Ausführungsformen ist es möglich, daß sich die Kühlluftführung 4 bzw. 4' (Fig. 1 und 2) oder 40 schon axial vor der volumetrischen Ebene E1 bzw. vor dem Beginn der Nachbrennzone III so verengt, daß der jeweilige Kühlfilm F bzw. F' unmittelbar am Eintritt in die Nachbrennzone III ausgebildet wird.

Soweit nicht schon in den Patentansprüchen niedergelegt, ist die zuvor beschriebene und/oder zeichnerisch dargestellte Ausführungsweise von Brennkammern ebenfalls Bestandteil der Erfindung.

## Patentansprüche

1. Brennkammer für Gasturbinenwerke, mit einem Flammrohr, bei dem eine von Verdichterluft umströmte Außenwand (2) durch mindestens ein Wandelement (3) vor Heißgasdurchbrand geschützt ist und zusammen mit der Außenwand (2) mindestens eine Kühlluftführung (4) ausbildet, mit mindestens einer an der Rückwand (8) des Flammrohrs angeordneten, mit einer Luftdrallvorrichtung (10) kombinierten Brennstoffdüse (11) wobei über die Luftdrallvorrichtung (10) zumindest ein Teil der für die Verbrennung benötigten Luft zugeführt wird, mit zumindest einer Reihe von Luftbuchsen (5), die mit einer Zumisch-Brennzone (II) in Verbindung steht, wobei sich im Flammrohr stromauf eine an Brennstoff reiche Verbrennungszone (I) und stromab der Luftbuchsen (5) eine an Brennstoff arme Nachbrennzone (III) ausbildet, **dadurch gekennzeichnet, dass** die Kühlluftführung (4) unter Einschluss der Flammrohrrückwand (8) über das Wandelelement (3) doppelwandig und mit einem in die an Brennstoff arme Nachbrennzone (III) hineinragenden Endteil ausgebildet ist, und dass die Kühlluft am stromabwärtigen Ende der Kühlluftführung (4) als Kühlfilm (F) austritt.

2. Brennkammer nach Anspruch 1, **dadurch gekennzeichnet, dass** stromauf der Luftbuchsen (5) weitere Luftbuchsen (5') vorgesehen sind, mit denen zumindest teilweise die an Brennstoff reiche Verbrennungszone (I) mit Verbrennungsluft versorgt wird.

3. Brennkammer nach Anspruche 1 oder 2, **dadurch gekennzeichnet, dass** sich die Kühlluftführung (4) stromab der Luftbuchsen (5) zu einem Ringschlitz (6) verengt, der zwischen einem axialen Lippenende (7) des Wandelements (3) und der daran angrenzenden Außenwand (2) ausgebildet ist.

4. Brennkammer nach einem der vorhergehenden Ansprüche, **dadurch gekennzeichnet, dass** die Kühlluft oder ein Teilstrom hiervon im Bereich der Luftbuchsen (5, 5") unter Vermischung mit der Verbrennungsluft aus der Kühlluftführung (4) austritt.

5. Brennkammer nach Anspruch 4, **dadurch gekennzeichnet, dass** die Luftbuchsen (5") als Injektordüsen ausgeführt sind, bei welchen die über die Luftbuchsen (5") zugeführte Verbrennungsluft die Kühlluft fördert.

6. Brennkammer nach Anspruch 4 oder 5, **dadurch gekennzeichnet, dass** die Luftbuchsen (5") mit einem radial inneren Kanal (50) zur Führung der Verbrennungsluft und mit einem radial äußeren, konzentrischen Kanal (51) zur Führung der Kühlluft im Flammrohr münden.

7. Brennkammer nach Anspruch 3, **dadurch gekennzeichnet, dass** in dem die Rückwand (8) ausbildenden Teil der Außenwand (2) des Flammrohrs Öffnungen (9) für die Zufuhr von Kühlluft in die Kühlluftführung (4) angeordnet sind.

8. Brennkammer nach einem der vorhergehenden Ansprüche, **dadurch gekennzeichnet, dass** längs eines seitlichen Teils des Flammrohrs zwei durch eine radial äußere Abschirmung (12) am Wandelement (3) voneinander getrennte Kühlluftführungen (40,41) vorgesehen sind, die jeweils über radial äußere vor bzw. hinter der Abschirmung (12) liegende Öffnungen (13 bzw. 14) in der Außenwand (2) mit Kühlluft beaufschlagbar sind, wobei die Kühlluftführung (41) der Rückwand (8) abströmseitig, radial innen an die Lufteintritte von Kanälen (20) der Drallvorrichtung (10) angeschlossen ist.

9. Brennkammer nach einem der vorhergehenden Ansprüche, **dadurch gekennzeichnet, dass** das Wandelelement (3) bezüglich der Außenwand (2) frei dehnbar zentriert ist.

10. Brennkammer nach einem der vorhergehenden Ansprüche, **dadurch gekennzeichnet, dass** das Wandelement (3) über sämtliche Luftbuchsen (5) und mit gegenüber diesen axial beabstandeten Stiften oder Stegen (15) radial und axial beweglich an der Außenwand (2) aufgehängt ist.

11. Brennkammer nach Anspruch 9, **dadurch gekennzeichnet, dass** die Abschirmung (12) zur radial und axial beweglichen Aufhängung des Wandelements (3) an der Außenwand (2) ausgebildet ist.

12. Brennkammer nach einem der vorhergehenden Ansprüche, **dadurch gekennzeichnet, dass** das Wandelement (3) durch eine an der Kühlluftführung (4) ausgebildete Aufprallkühlung (F) gekühlt ist, wozu die Außenwand (2) örtlich perforiert ist.

13. Brennkammer nach Anspruch 12, **dadurch gekennzeichnet, dass** die Aufprallkühlung (F) an einem die Außenwand (2) seitlich und/oder an der Rückwand (8) abschirmenden Abschnitt des Wandelements (3) vorgesehen ist.

14. Brennkammer nach einem der vorhergehenden Ansprüche, **dadurch gekennzeichnet, dass** die Luftbuchsen (5, 5', 5") sich im wesentlichen radial zwischen der Außenwand (2) und dem Wandelelement (3) in der Kühlluftführung (4) erstrecken.

15. Brennkammer nach einem der vorhergehenden Ansprüche, **dadurch gekennzeichnet, dass** sämtliche Luftbuchsen (5,5') fest und fluiddicht mit dem Wandelement (3) verbunden sind.

16. Brennkammer nach einem der vorhergehenden Ansprüche, **dadurch gekennzeichnet, dass** sie als radial mit Abstand und koaxial zur Triebwerksachse angeordnete Ringbrennkammer ausgebildet ist, worin die Außenwand (2) und das Wandelement (3) jeweils radial außen und radial innen ringförmig ausgebildet sind, so dass jeweils eine radial äußere und eine radial innere ringförmige Kühlluftführung (4;4') ausgebildet wird.

## Claims

1. Combustor for gas turbine units, with a flame tube wherein an outer wall (2) around which compressor air flows is protected by at least one wall element (3) against hot gas burn-out and this, together with the outer wall (2), forms at least one cooling air duct (4), with at least one fuel nozzle (11) located at the rear wall (8) of the flame tube and combined with an air swirl device (10), whereby at least part of the air required for combustion is supplied via the air swirl device (10), with at least one row of air bushes (5) connected to an admixing combustion zone (II), whereby a combustion zone (I) rich in fuel forms upstream in the flame tube and an afterburner zone (III) lean in fuel forms downstream of the air bushes (5), **characterised in that** the cooling air duct (4) with the inclusion of the rear wall (8) of the flame tube is designed double-walled over the wall element (3) and with an end section projecting into the afterburner zone (III) lean in fuel, and **in that** the cooling air is discharged as a cooling film (F) at the downstream end of the cooling air duct (4).

2. Combustor according to claim 1, **characterised in that** further air bushes (5') are provided upstream of the air bushes (5), by means of which the combustion zone (I) rich in fuel is at least partially supplied with combustion air.

3. Combustor according to claim 1 or 2, **characterised in that** the cooling air duct (4) downstream of the air bushes (5) narrows to form an annular slot (6) formed between an axial lip end (7) of the wall element (3) and the adjacent outer wall (2).

4. Combustor according to any of the preceding claims, **characterised in that** the cooling air or part thereof is discharged from the cooling air duct (4) in the area of the air bushes (5, 5") while being mixed with the combustion air.

5. Combustor according to claim 4, **characterised in that** the air bushes (5") are designed as injector nozzles, whereby the combustion air supplied via the air bushes (5") conveys the cooling air.

6. Combustor according to claim 4 or 5, **characterised in that** the air bushes (5") terminate in the flame tube with a radially inner passage (50) for guiding the combustion air and concentric, radially outer passage (51) for guiding the cooling air.

7. Combustor according to claim 3, **characterised in that** ports (9) for the supply of cooling air to the cooling air duct (4) are provided in the part of the outer wall (2) which forms the rear wall (8).

8. Combustor according to any of the preceding claims, **characterised in that**, along a lateral part of the flame tube, two cooling air ducts (40, 41) separated by a radially outer screen (12) on the wall element (3) are provided, each being supplied with cooling air via radially outer ports (13 or 14) in the outer wall (2) located in front of or behind the screen (12), the cooling air duct (41) of the rear wall (8) being connected to the air intakes of passages (20) of the swirl device (10) at the radially inner discharge end.

9. Combustor according to any of the preceding claims, **characterised in that** the wall element (3) is centred relative to the outer wall (2) and capable of free expansion.

10. Combustor according to any of the preceding claims, **characterised in that** the wall element (3) is suspended from the outer wall (2) for radial and axial movement by means of all air bushes (5) and with the aid of pins or webs (15) arranged at an axial distance therefrom.

11. Combustor according to claim 9, **characterised in that** the screen (12) is designed for the radially and axially movable suspension of the wall element (3) from the outer wall (2).

12. Combustor according to any of the preceding claims, **characterised in that** the wall element (3) is cooled by an impingement cooling arrangement (F) provided on the cooling air duct (4), the outer wall (2) being locally perforated for this purpose.

13. Combustor according to claim 12, **characterised in that** the impingement cooling arrangement (F) is provided at a section of the wall element (3) screening the outer wall (2) laterally and/or at the rear wall (8).

14. Combustor according to any of the preceding claims, **characterised in that** the air bushes (5, 5', 5") extend substantially radially in the cooling air duct (4) between the outer wall (2) and the wall element (3).

15. Combustor according to any of the preceding claims, **characterised in that** all air bushes (5, 5') are fixed to the wall element (3) to form a fluid-tight seal.

16. Combustor according to any of the preceding claims, **characterised in that** it is designed as an annular combustion chamber arranged at a distance from and coaxial with the axis of the power unit, the radially outer and radially inner shape of the outer wall (2) and the wall element (3) being annular, thus forming a radially outer and a radially inner cooling air duct (4; 4').

## Revendications

1. Chambre de combustion pour ouvrages de turbine à gaz, avec un tube de flammes dans lequel une paroi extérieure (2) entourée d'un flux d'air de compression est protégée de la combustion totale des gaz chauds par au moins un élément de paroi (3) et forme avec la paroi extérieure (2) au moins une conduite d'air de refroidissement (4), avec au moins un gicleur (11) combiné avec un dispositif de rotation d'air disposé sur la paroi arrière (8) du tube de flammes, moyennant quoi, au moins une partie de l'air nécessaire à la combustion est alimentée par le dispositif de rotation d'air (10), avec au moins une série de coussinets d'air (5), qui sont en contact avec une zone de combustion d'ajout (II), moyennant quoi, une zone de combustion (I) riche en combustible se forme dans le tube de flammes en amont et en aval des coussinets d'air (5) une zone de postcombustion (III) pauvre en combustible, **caractérisée en ce que** la conduite d'air de refroidissement (4) est formée à paroi double en enfermant la paroi arrière du tube de flammes (8) sur l'élément de paroi (3) et avec une partie finale entrant dans la zone de combustion (III) pauvre en combustible, et **en ce que** l'air de refroidissement s'évacue à l'extrémité en aval de la conduite d'air de refroidissement (4) en tant que film de refroidissement (F).

2. Chambre de combustion selon la revendication 1, **caractérisée en ce que** en amont des coussinets d'air (5) d'autres coussinets d'air (5') sont prévus, par lesquels la zone de combustion (I) riche en combustible est au moins partiellement alimentée en air de combustion.

3. Chambre de combustion selon la revendication 1 ou 2, **caractérisée en ce que** la conduite d'air de refroidissement (4) se resserre en aval des coussinets d'air (5) en une rainure circulaire (6), qui est formée entre une extrémité à lèvres axiale (7) de l'élément de paroi (3) et la paroi extérieure (2) qui y est contiguë.

4. Chambre de combustion selon l'une quelconque des revendications précédentes, **caractérisée en ce que** l'air de refroidissement ou un courant dérivé de celui-ci s'échappe de la conduite d'air de refroidissement (4) au niveau des coussinets d'air (5, 5") par le mélange avec l'air de combustion.

5. Chambre de combustion selon la revendication 4, **caractérisée en ce que** les coussinets d'air (5") sont formés en tant que buses d'injection, dans lesquelles l'air de combustion alimentée par les coussinets d'air (5") récupère l'air de refroidissement.

6. Chambre de combustion selon la revendication 4 ou 5, **caractérisée en ce que** les coussinets d'air (5") débouchent dans le tube de flammes avec un canal intérieur radial (50) pour l'alimentation de l'air de combustion et avec un canal concentrique, extérieur radial (51) pour l'alimentation de l'air de refroidissement.

7. Chambre de combustion selon la revendication 3, **caractérisée en ce que** des ouvertures (9) pour l'alimentation d'air de refroidissement dans la conduite d'air de refroidissement sont disposées dans la partie formant la paroi arrière (8) de la paroi extérieure (2) du tube de flammes.

8. Chambre de combustion selon l'une quelconque des revendications précédentes, **caractérisée en ce que** deux conduites d'air de refroidissement (40, 41) distantes l'une de l'autre par une protection extérieure radiale (12) sur l'élément de paroi (3) sont prévues le long d'une partie latérale du tube de flammes, qui peuvent chacune être alimentées en air de refroidissement par les ouvertures (13 ou 14) extérieures radiales dans la paroi extérieure (2) se trouvant devant ou derrière la protection (12), moyennant quoi, la conduite d'air de refroidissement (41) de la paroi arrière (8) en aval, est reliée radialement à l'intérieur sur les entrées d'air des canaux (20) du dispositif de rotation (10).

9. Chambre de combustion selon l'une quelconque des revendications précédentes, **caractérisée en ce que** l'élément de paroi (3) est centré par rapport à la paroi extérieure (2) de manière librement extensible.

10. Chambre de combustion selon l'une quelconque des revendications précédentes, **caractérisée en ce que** l'élément de paroi (3) est suspendu radialement et axialement mobile sur la paroi extérieure (2) sur tous les coussins d'air (5) et avec des tiges ou des entretoises (15) espacés axialement par rapport auxdits coussinets

11. Chambre de combustion selon la revendication 9, **caractérisée en ce que** la protection (12) est formée sur la paroi extérieure (2) pour la suspension mobile radiale et axiale de l'élément de paroi (3).

12. Chambre de combustion selon l'une quelconque des revendications précédentes, **caractérisée en ce que** l'élément mural (3) est refroidi par un refroidissement par chocs (F) formé sur la conduite d'air de refroidissement (4), raison pour laquelle la paroi extérieure (2) est perforée localement.

13. Chambre de combustion selon la revendication 12, **caractérisée en ce que** le refroidissement par chocs (F) est prévu sur une section de l'élément extérieur (3) protégeant la paroi extérieure (2) latéralement et/ou sur la paroi arrière (8).

14. Chambre de combustion selon l'une quelconque des revendications précédentes, **caractérisée en ce que** les coussinets d'air (5, 5', 5") s'étendent essentiellement radialement entre la paroi extérieure (2) et l'élément de paroi (3) dans la conduite d'air de refroidissement (4).

15. Chambre de combustion selon l'une quelconque des revendications précédentes, **caractérisée en ce que** les coussinets d'air (5, 5') sont liés à l'élément mural (3) fermement et de manière étanche aux fluides.

16. Chambre de combustion selon l'une quelconque des revendications précédentes, **caractérisée en ce qu'**elle est formée en tant que chambre de combustion circulaire disposée radialement avec espacement et coaxialement par rapport à l'axe du moteur, dans laquelle la paroi extérieure (2) et l'élément mural (3) sont chacun en forme d'anneau radialement à l'extérieur et radialement à l'intérieur, de telle sorte que chaque fois une conduite d'air de refroidissement (4 ; 4') extérieure radiale et intérieure radiale en forme d'anneau est formée.
